# EUROPÄISCHE PATENTANMELDUNG

(11) **EP 4 465 586 A1**
(43) Veröffentlichungstag der Anmeldung: **20.11.2024**
(21) Anmeldenummer: 23173677.8
(22) Anmeldetag: 16.05.2023
(51) Int. Cl.: H04L 9/06, H04L 9/08, H04L 9/32, H04L 9/00

(54) **VERFAHREN ZUM ERZEUGEN VON ZUMINDEST EINER HASHBASIERTEN SIGNATUR FÜR EIN ENDGERÄT IN EINEM KOMMUNIKATIONSNETZWERK MITTELS EINES KOMMUNIKATIONSSYSTEMS, COMPUTERPROGRAMMPRODUKT, COMPUTERLESBARES SPEICHERMEDIUM SOWIE KOMMUNIKATIONSSYSTEM**

(71) Anmelder: Siemens Aktiengesellschaft, 80333 München (DE)
(72) Erfinder: Fischer, Kai, 85598 Baldham (DE); Piccoli, Alessandro, 80333 München (DE); Safieh, Malek, 81539 München (DE)
(74) Vertreter: Siemens Patent Attorneys

(57) **Zusammenfassung**

Die Erfindung betrifft ein Verfahren zum Erzeugen von zumindest einer hashbasierten Signatur (36) für ein Endgerät (12) in einem Kommunikationsnetzwerk mittels eines Kommunikationssystems (10), mit den Schritten:
- Erzeugen eines Hashseeds (18) mittels einer elektronischen Recheneinrichtung (14) des Kommunikationssystems (10);
- Erzeugen eines sicheren Übertragungskanals (20) zwischen dem Endgerät (12) und der elektronischen Recheneinrichtung (14) mittels des Kommunikationssystems (10);
- Übermitteln des Hashseeds (18) an das Endgerät (12) über den sicheren Übertragungskanal (20);
- Speichern des Hashseeds (18) im Endgerät (12) in einer Speichereinrichtung (22) des Endgeräts (12);
- Erzeugen von zumindest einem privaten Schlüssel (sk1) in Abhängigkeit von dem Hashseed (18) mittels einer weiteren elektronischen Recheneinrichtung (16) des Endgeräts (12); und
- Erzeugen der hashbasierten Signatur (36) in Abhängigkeit des privaten Schlüssels (sk1) und Erzeugen eines öffentlichen Schlüssels (pk1) in Abhängigkeit von dem privaten Schlüssel (sk1) mittels der weiteren elektronischen Recheneinrichtung (16) zum Verifizieren der hashbasierten Signatur (36). Ferner betrifft die Erfindung ein Computerprogrammprodukt, ein computerlesbares Speichermedium sowie ein Kommunikationssystem (10) .

## Beschreibung

Die Erfindung betrifft ein Verfahren zum Erzeugen von zumindest einer hashbasierten Signatur für ein Endgerät in einem Kommunikationsnetzwerk mittels eines Kommunikationssystems gemäß dem geltenden Patentanspruch 1. Ferner betrifft die Erfindung ein Computerprogrammprodukt, ein computerlesbares Speichermedium sowie ein Kommunikationssystem.

Digitale Signaturen sind ein wichtiger Bestandteil der asymmetrische Kryptographie, die zur Authentisierung und zum Integritätsschutz dienen. Für viele Anwendungen z.B. Softwareupdate, Zertifikate, sicherer Kommunikationsaufbau usw. sind digitale Signaturen notwendig. Die Sicherheit klassischer Signaturverfahren (oder allgemein asymmetrischer Kryptographie) wie Rivest-Shamir-Adleman (RSA), Elliptische Kurven ist auf Einwegfunktionen (Punktmultiplikation, oder Faktorisierungsproblem) angewiesen, die nicht in polynomieller Zeit gelöst bzw. angegriffen werden können, und daher als sicher gelten. Die Berechnung der Einwegfunktion ist im Vergleich mit anderen Krypto-Operationen sehr aufwendig. Dadurch entsteht allgemein die Herausforderung, Funktionen der asymmetrischen Kryptographie insbesondere für ressourcenbeschränkte Geräte so weit wie möglich zu reduzieren. Als Kandidaten sind heutzutage hashbasierte Signaturen bekannt (z.B. XMSS oder LMS), die insbesondere im Kontext Post-Quantum Kryprographie in den letzten Jahren an Bedeutung gewonnen haben. Hashbasierte Signaturen können effizient mit Hashberechnungen (z.B. SHA-2, SHA-256 oder SHA-3 usw.) möglicherweise sequenziell oder parallel erzeugt und verifiziert werden. Jedoch haben hashbasierte Signaturen zwei Eigenschaften, die eine Herausforderung in einer Anwendung darstellen.

Erstens können allgemein nicht beliebig viele Signaturen bzw. nur eine begrenzte Anzahl von Signaturen mit einem öffentlichen Schlüssel verifiziert werden. Des Weiteren handelt es sich um Einmalsignaturen (One-Time-Signature, OTS) bzw. private Schlüsseln dürfen nur ein einziges Mal in der gesamten Lebensdauer eines Geräts für die Erstellung einer Signatur verwendet werden. Werden bereits verwendete private Schlüssel zum Signieren nochmal eingesetzt, so wird ein hashbasiertes Signaturverfahren unsicher. Dadurch entsteht die Notwendigkeit an einer komplexen Schlüsselverwaltung insbesondere für die Erzeugung von komplett neuen und zufälligen privaten Schlüsseln.

Aufgabe der vorliegenden Erfindung ist es, ein Verfahren, ein Computerprogrammprodukt, ein computerlesbares Speichermedium sowie ein Kommunikationssystem zu schaffen, mittels welchem eine verbesserte Erzeugung einer hashbasierten Signatur innerhalb eines Kommunikationsnetzwerks realisiert werden kann.

Diese Aufgabe wird durch ein Verfahren, ein Computerprogrammprodukt, ein computerlesbares Speichermedium sowie ein Kommunikationssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen von zumindest einer hashbasierten Signatur für ein Endgerät in einem Kommunikationsnetzwerk mittels eines Kommunikationssystems. Es erfolgt das Erzeugen eines Hashseeds mittels einer elektronischen Recheneinrichtung des Kommunikationssystems. Es wird ein sicherer Übertragungskanal zwischen dem Endgerät und der elektronischen Recheneinrichtung mittels des Kommunikationssystems erzeugt. Es erfolgt das Übermitteln des Hashseeds an das Endgerät über den sicheren Übertragungskanal. Das Hashseed wird im Endgerät in einer Speichereinrichtung des Endgeräts gespeichert. Es wird zumindest ein privater Schlüssel in Abhängigkeit von dem Hashseed mittels einer weiteren elektronischen Recheneinrichtung des Endgeräts erzeugt. Die hashbasierte Signatur wird in Abhängigkeit von dem privaten Schlüssel erzeugt und es erfolgt ein Erzeugen eines öffentlichen Schlüssels in Abhängigkeit von dem privaten Schlüssel mittels der weiteren elektronischen Recheneinrichtung zum Verifizieren der hashbasierten Signatur.

Insbesondere kann somit ein sicheres Konzept bei einer sicheren Kommunikation mit Geräten, die beispielsweise für eine beschränkte Zeit, beispielsweise Tage bis wenige Wochen, zum Einsatz kommen, realisiert werden. Insbesondere ist es dabei entscheidend, dass zumindest die Anzahl von benötigten Signaturen hierbei bekannt ist. Dabei wird insbesondere lediglich eine begrenzte Anzahl von Signaturen benötigt, zum Beispiel vier bis 32 Signaturen. Vor jedem Einsatz wird ein Gerät neu initialisiert gegebenenfalls zurückgesetzt. Dabei wird die Menge der benötigten hashbasierten Signaturen für das nächste Zeitintervall bestimmt.

Erfindungsgemäß generiert nicht das Endgerät das Hashseed, sondern die elektronische Recheneinrichtung, welche beispielsweise auch als Remotesystem bezeichnet werden kann, wobei dies auch alternativ eine leistungsfähige Partei im Kommunikationssystem sein kann, erzeugt das Hashseed und schickt diesen über den sicheren Übertragungskanal zum Endgerät. Das Endgerät empfängt das neue Hashseed, speichert dies in einem geschützten Speicher und rechnet daraus die benötigten privaten Schlüssel. Diese privaten Schlüssel werden später zum Signieren benötigt, insbesondere beispielsweise zur Erzeugung eines sicheren Kommunikationskanals, und können aus dem sicheren gespeicherten Hashseed jederzeit on-the-fly erzeugt werden.

Generell muss das Endgerät für die Unterstützung dieses Konzepts beispielsweise ein Key-Derivation-Funktion (KDF) sowie eine Hashfunktion unterstützen sowie eine entsprechende Steuerlogik aufweisen. Diese Funktionen sind oft bei eingebetteten Systemen (Embedded Systems) bereits für andere verbreitete Basisfunktionen, zum Beispiel Schlüssel-Updates und sichere Kommunikationsprototolle vorhanden, insbesondere beispielsweise und vorzugsweise als ein Hardware-Beschleunigungsmodul, und können wiederverwendet werden. Für höhere Leistung können die KDF- und Hashberechnungen mit einem Hardwaremodul im Endgerät implementiert werden.

Insbesondere ist somit ein Konzept für die Verwendung von hashbasierten Signaturen im Endgerät für Schutzmaßnahmen von Funktionalitäten innerhalb vom Endgerät wie beispielsweise Secure Boot oder Firmwareupdate vorgeschlagen.

Es ist dabei vorgesehen, dass nicht das Endgerät das Hashseed, sondern das Remotesystem das Hashseed erzeugt und schickt diesen über den sicheren Übertragungskanal zum Endgerät. Nun kann der sichere Kanal bereits abgebaut werden. Das Endgerät empfängt das neue Hashseed und rechnet daraus den privaten Schlüssel, wobei im Gegensatz zum Stand der Technik das Hashseed nicht sicher gespeichert werden muss. Der private Schlüssel wird nun zum Signieren von relevanten Daten, insbesondere als Vorbereitung für ein Softwareupdate oder während eines Secureboots oder dergleichen, im Endgerät verwendet. Das Endgerät berechnet aus dem privaten Schlüssel mithilfe von iterativen Hashberechnungen einen öffentlichen Schlüssel. Dieser öffentliche Schlüssel wird im Endgerät sicher gespeichert. Im späteren Zeitpunkt wird dieser öffentliche Schlüssel verwendet, um signierte Daten vom Endgerät im Nachgang auf einer vertrauten Art und Weise verifizieren zu können.

Die hashbasierte Signatur kann beispielsweise insbesondere für ein sogenanntes XMSS-Verfahren gültig sein. Das Hashseed wird beim Remotesystem generiert und über den sicheren Übertragungskanal mit dem Endgerät ausgetauscht. Sofort danach kann der sichere Kanal abgebaut werden. Aus diesem Hashseed dürfen keine privaten Schlüssel generiert werden, die bereits einmal in der Lebensdauer des Endgeräts generiert und/oder verwendet wurden. Eine Einmalsignatur darf dabei insbesondere einmalig für bestimmte Daten mit einem einzigen privaten Schlüssel erzeugt werden. Jedoch ist es möglich diese Signatur beliebig oft mit dem dazugehörigen öffentlich Schlüssel zu verifizieren. Die Daten können dabei mehrfach mit demselben privaten Schlüssel signiert werden, wenn die Daten sich nicht ändern. Mit anderen Worten bedeutet Einmalsignaturen, dass nur dieselben Daten mit demselben privaten Schlüssel signiert werden dürfen, wie oft signiert oder verifiziert wird ist jedoch unwesentlich.

Diese Aufgabe ist aufwendig und wird von der Schlüsselverwaltung beziehungsweise dem Key Management, insbesondere der elektronischen Recheneinrichtung, übernommen. Das Endgerät empfängt das Hashseed über den sicheren Übertragungskanal und generiert daraus einen privaten Schlüssel. Nun kann das Endgerät mit dem privaten Schlüssel eine Signatur erstellen. Aus dem privaten Schlüssel wird durch beispielsweise iterative Hashberechnung ein öffentlicher Schlüssel generiert und sicher gespeichert. Zu einem späteren Zeitpunkt kann die Signatur erfolgreich mit diesem öffentlichen Schlüssel verifiziert werden. Die Erstellung und Verifizierung der hashbasierten Signaturen mit dem privaten und öffentlichen Schlüssel aus dieser Erfindung kann beispielsweise gemäß den Standards für XMSS und LMS ausgeführt werden. Ähnliche Beispiele existieren für andere hashbasierte Signaturverfahren oder mehrere Schlüsselpaare für hashbasierte Einmalsignaturen.

Insbesondere sind asymmetrische Kryptographie beziehungsweise digitale Signaturen auf private und öffentliche Schlüsselpaare angewiesen. Für die Aktualisierung der privaten Schlüssel für hashbasierte Signaturen müssen dabei neue private Schlüssel erzeugt werden, die in der Vergangenheit von derselben Partei noch nicht verwendet wurden. Normalerweise wird diese Schlüsselverwaltung von dem Endgerät übernommen, die digitale Signaturen erstellen soll. Diese Aufgabe kann aber je nach Signaturverfahren besonders komplex werden, insbesondere für hashbasierte Signaturverfahren.

Es ist somit insbesondere vorgeschlagen, die Komplexität für die Schlüsselverwaltung von einer leistungsfähigen Partei, insbesondere der elektronischen Recheneinrichtung, zu übernehmen. Die Erfindung dient zum Schutz des Kommunikationskanals mit anderen Parteien sowie für den Schutz von Daten für interne Funktionalitäten im Endgerät selbst. Das erfindungsgemäße Konzept beziehungsweise Verfahren kann in vielen Bereichen insbesondere Bereiche digitaler Signaturen bei ressourcen-beschränkten Endgeräten angewendet werden. Dabei reduziert sich die Komplexität für die Speicherung und Verwaltung von den Hashseeds, die ständig bei Schlüsselaktualisierungen neu, unterschiedlich und eindeutig generiert werden müssen.

Der Hashseed entspricht dabei insbesondere einem Geheimnis und darf daher nur über einen integritätsgeschützten und vertraulichen Kanal übertragen werden, was vorliegend mit dem sicheren Übertragungskanal bereitgestellt wird. Alle öffentlichen Schlüssel, eventuell ein Root-Hash, sowie Zertifikate sind nicht vertraulich, jedoch müssen diese vertrauenswürdig sein. Daher besteht hierfür lediglich die Notwendigkeit an einen integritätsgeschützten, nicht unbedingt vertraulichen Übertragungskanal. Der sichere Übertragungskanal kann somit für die Übersendung des Hashseeds integritätsgeschützt und vertraulich sein und für die Übersendung der öffentliche Schlüssel, des Root-Hash und der Zertifikate lediglich integritätsgeschützt. Es ist selbstverständlich auch möglich, dass der sichere Kanal auch vertraulich ist.

Gemäß einer vorteilhaften Ausgestaltungsform wird das Hashseed mittels eines Zufallszahlengenerators der elektronischen Recheneinrichtung erzeugt. Insbesondere wird somit das Hashseed in dem Remotesystem generiert und über den sicheren Übertragungskanal mit dem Endgerät ausgetauscht. Aus diesem Hashseed werden wiederum keine privaten Schlüssel generiert, die bereits einmal in der Lebensdauer des Endgeräts verwendet wurden. Diese Aufgabe ist sehr aufwendig und wird von der Schlüsselverwaltung beziehungsweise dem Keymanagement insbesondere auf Basis des Zufallszahlengenerators (Random Number Generator - RNG) beim Remotesystem übernommen. Somit kann die komplexe Aufgabe des Schlüsselverwaltens von der elektronischen Recheneinrichtung durchgeführt werden.

Ebenfalls vorteilhaft ist, wenn der öffentliche Schlüssel auf Basis einer iterativen Hashberechnung des privaten Schlüssels erzeugt wird. Insbesondere empfängt somit das Endgerät das Hashseed über den sicheren Übertragungskanal, speichert diesen in einem geschützten Speicher und generiert daraus den zumindest einen privaten Schlüssel. Insbesondere für das XMSS-Verfahren und/oder LMS-Verfahren und/oder bei sogenannten L-Trees werden dann aus dem privaten Schlüssel durch iterative Hashberechnung (WOTS - Winternitz type one-time signature sheet) die hashbasierten Signaturen zuverlässig erzeugt. Die L-Trees erlauben wiederum eine parallelisierte Berechnung der öffentlichen Schlüssel.

Es hat sich weiterhin als vorteilhaft erwiesen, wenn mittels der elektronischen Recheneinrichtung eine Vielzahl von Hashseeds in einem vorgegebenen Zeitraum erzeugt wird, und mittels der elektronischen Recheneinrichtung durch Vergleichen der Hashseeds in dem Zeitraum eine Wiederholung von gleichen Hashseeds verhindert wird. Insbesondere kann der vorgegebene Zeitraum lediglich Tage bis Wochen betragen, um die Anzahl von möglichen Signaturen zu verringern und die Komplexität zu reduzieren. Jedoch wird die endliche Anzahl von Einmalsignaturen bzw. die Betriebsdauer des Geräts mit dem vorgeschlagenen Konzepten nicht eingeschränkt. Insbesondere ist es somit vorgesehen, dass die Kommunikation mit dem Endgerät für eine beschränkte Zeit zum Einsatz kommt. Dabei wird die begrenzte Anzahl von Signaturen benötigt, zum Beispiel vier bis 32 Signaturen. Vor jedem Einsatz wird das Endgerät neu initialisiert und gegebenenfalls zurückgesetzt. Dabei wird die Menge der benötigten hashbasierten Signaturen für das nächste Zeitintervall bestimmt. Innerhalb dieses Zeitintervalls werden mehrere Hashsignaturen über die elektronische Recheneinrichtung erzeugt. Diese werden miteinander verglichen, sodass sichergestellt werden kann, dass die Hashseeds sich nicht wiederholen. Der Aufwand hierfür wächst mit wachsenden Anzahl von bereits verwendeten Hashseeds. Daher ist es vorteilhaft diese Aufgabe das Remotesystem zu überlassen. Somit reduziert sich die Komplexität für das Endgerät. Dadurch kann sichergestellt werden, dass eine zuverlässige Hashseedverwaltung realisiert werden kann.

Ferner hat es sich als vorteilhaft erwiesen, wenn mittels einer Schlüsselableitungsfunktion der private Schlüssel auf Basis des Hashseeds erzeugt wird. Bei der Schlüsselableitungsfunktion handelt es sich insbesondere um Key Derivation Functions (KDF), wodurch zuverlässig die hashbasierte Signatur beziehungsweise der private Schlüssel erzeugt werden kann.

Ebenfalls vorteilhaft ist, wenn auf Basis des Hashseeds zumindest ein weiterer privater Schlüssel, eine weitere hashbasierte Signatur und ein weiterer öffentlicher Schlüssel erzeugt werden. Mehrere Schlüssel können vom gleichen Hashseed abgeleitet werden, wenn beispielsweise ein Counter oder ähnliches Verfahren verwendet wird, um das Input für die Ableitungen zu unterscheiden. Der weitere private Schlüssel und der private Schlüssel sind dabei insbesondere unterschiedlich. Dabei kann beispielsweise vorgesehen sein, dass in Abhängigkeit von dem öffentlichen Schlüssel und dem weiteren öffentlichen Schlüssel ein Root-Hash mittels der weiteren elektronischen Recheneinrichtung erzeugt wird. Alternativ können lediglich die öffentlichen Schlüssel mittels der weiteren elektronischen Recheneinrichtung erzeugt werden und dann zur elektronischen Recheneinrichtung übertragen werden. Die elektronische Recheneinrichtung kann auf Basis der übertragenen öffentlichen Schlüssel den Root-Hash erzeugen. Der Root-Hash basiert im Wesentlichen auf einer Vielzahl von öffentlichen Schlüsseln. Anstatt nun die Vielzahl von öffentlichen Schlüsseln zu verwenden, wird der Root-Hash erzeugt. Der Root-Hash kann dabei für interne Funktionen im Endgerät genutzt werden. Ebenfalls kann vorgesehen sein, dass der Root-Hash an die elektronische Recheneinrichtung übertragen wird.

Ferner kann dabei vorgesehen sein, dass der Root-Hash über den sicheren Übertragungskanal an die elektronische Recheneinrichtung übertragen wird. Insbesondere können mit dem Root-Hash eine Vielzahl von Signaturen verifiziert werden, beispielsweise können vier mögliche Signaturen verifiziert werden. Das Hashseed wird bei der elektronischen Recheneinrichtung generiert und über den sicheren Übertragungskanal mit dem Endgerät ausgetauscht. Aus diesem Hashseed werden wiederum keine privaten Schlüssel generiert, die bereits einmal in der Lebensdauer des Endgeräts verwendet wurden. Diese Aufgabe ist aufwendig und wächst linear mit der Anzahl der bereist verwendeten Hashseeds und wird nun von der Schlüsselverwaltung übernommen. Das Endgerät empfängt das Hashseed über den Übertragungskanal, speichert ihn in einem geschützten Speicher und generiert daraus vier private Schlüssel mithilfe von KDF. Für das XMSS-Verfahren werden dann aus den vier privaten Schlüsseln durch iterative Hashberechnung vier öffentliche Schlüssel generiert. Danach wird ein Root-Hash aus diesen vier öffentlichen Schlüsseln mithilfe des sogenannten Merkle-Baums erstellt, über den sicheren Übertragungskanal mit der elektronischen Recheneinrichtung ausgetauscht und bei der elektronischen Recheneinrichtung sicher gespeichert. Nun kann das Endgerät vier Signaturen erstellen, die vom Remotesystem, insbesondere der elektronischen Recheneinrichtung, erfolgreich mit dem Root-Hash und dem passenden Verifizierungspfad verifiziert werden können. Falls weitere Parteien im Kommunikationssystem eine oder mehrere dieser Signaturen vertraulich verifizieren sollen, wird die elektronische Recheneinrichtung diese Verifizierung durchführen.

Die Überprüfung der Vertrauenswürdigkeit kann dabei dadurch durchgeführt werden, dass die elektronische Recheneinrichtung den Root-Hash vom Endgerät zu einer Zertifizierungsstelle (Certification Authority - CA) schickt, welche ein Zertifikat für das Endgerät ausstellen kann. Entsprechend schickt dann die elektronische Recheneinrichtung das erstellte Zertifikat zum Endgerät zurück. Damit kann sich das Endgerät gegenüber anderen Parteien ausweisen. Hierzu kann sich die elektronische Recheneinrichtung gegenüber der Zertifizierungsstelle als vertrauenswürdige Instanz authentifizieren, die berechtigt ist, Anfragen zur Signierung von Root-Hashes zu erstellen. Alternativ kann die elektronische Recheneinrichtung den Root-Hash vom Endgerät signieren und schickt es zum Endgerät zurück. Mit dem signierten Root-Hash durch die elektronische Recheneinrichtung können spätere hashbasierte Signaturen vom Endgerät bei allen Parteien vertrauenswürdig verifiziert werden, die die elektronische Recheneinrichtung, und insbesondere sein Zertifikat des öffentlichen Schlüssels, bereits vertrauen. Nochmals alternativ kann die elektronische Recheneinrichtung den Root-Hash vom Endgerät über einen bereits existierenden und vertrauten Kanal, zum Beispiel TLS (Transport-Layer-Security - Transportschichtsicherheit), mit allen anderen Parteien im Kommunikationssystem austauschen. Dann können die Parteien im Nachgang hashbasierte Signaturen mit diesem Root-Hash erfolgreich verifizieren. Nochmals alternativ kann der Root-Hash auch bei der elektronischen Recheneinrichtung sicher gespeichert werden. Jede andere Partei, die eine Signatur vom Endgerät bekommt, kann den aktuellen Root-Hash vom Remotesystem auf eine sichere Art und Weise im Nachgang bekommen. Diese Aufzählung ist dabei rein beispielhaft und keinesfalls abschließend. Es können auch weiter Verfahren zum Bestätigen der Vertrauenswürdigkeit durchgeführt werden.

Weiterhin vorteilhaft ist, wenn der Root-Hash mittels der elektronischen Recheneinrichtung überprüft wird. Insbesondere kann somit der Root-Hash durch die elektronische Recheneinrichtung überprüft und durch sich selbst oder Dritte, beispielsweise einer Certification Authority, beglaubigt werden und es kann die Verifikation einer hash-basierten Signatur, insbesondere erzeugt durch das Endgerät, durch Dritte, beispielsweise Kommunikationspartner, geprüft werden. So kann die Vertrauenswürdigkeit beispielsweise durch die vier beschriebenen Konzepte entsprechend gewährleistet werden.

Gemäß einer weiteren vorteilhaften Ausgestaltungsform kann in Abhängigkeit von dem Hashseed eine Einmalsignatur mit einem einmaligen privaten Schlüssel erzeugt und mit einem einmaligen öffentlichen Schlüssel verifiziert werden, und der einmalige öffentliche Schlüssel über den sicheren Übertragungskanal an die elektronische Recheneinrichtung übertragen werden, und nach dem Übertragen des einmaligen öffentlichen Schlüssels der sichere Übertragungskanal abgebaut werden. Bei dem einmaligen öffentlichen Schlüssel handelt es sich insbesondere um einen zu dem einmaligen privaten Schlüssel zugehörigen öffentlichen Schlüssel. Hierzu kann ferner vorgesehen sein, dass während der Erzeugung der Einmalsignatur, des einmaligen privaten Schlüssels und des einmaligen öffentlichen Schlüssels parallel im Endgerät die zumindest eine hashbasierte Signatur erzeugt wird. Ferner kann hierzu vorgesehen sein, dass der öffentliche Schlüssel mit dem einmaligen privaten Schlüssel signiert wird, und der signierte öffentliche Schlüssel, insbesondere über einen ungesicherten Übertragungskanal, an die elektronische Recheneinrichtung übertragen wird, und der signierte öffentliche Schlüssel mit dem einmaligen öffentlichen Schlüssel mittels der elektronischen Recheneinrichtung verifiziert wird. Dieser Aspekt kann insbesondere in Zusammenschau mit dem Verfahren zur Hashseederzeugung in der elektronischen Recheneinrichtung betrachtet werden. Alternativ bildet dieser Aspekt auch einen unabhängigen Aspekt der Erfindung, insbesondere unabhängig zum Erzeugen des Hashseeds in der elektronischen Recheneinrichtung. Somit kann der vorhergehende Aspekt sowohl als synergetische Erfindung mit dem Erzeugen des Hashseeds in der elektronischen Recheneinrichtung, aber auch als einzelner Aspekt und somit insbesondere als unabhängiger Aspekt der Erfindung angesehen werden.

Insbesondere kann somit eine Erweiterung der Erfindung beziehungsweise ein eigenes Konzept vorgeschlagen werden. Bei diesem Konzept wird ebenso das Hashseed beispielsweise in der elektronischen Recheneinrichtung über den sicheren Übertragungskanal gesendet. Aus diesem Hashseed generiert das Endgerät mithilfe beispielsweise eines KDFs und iterativer Hashberechnung ein einmaliges Schlüsselpaar für eine einzige hashbasierte Einmalsignatur und tauscht den einmaligen öffentlichen Schlüssel mit der elektronischen Recheneinrichtung aus. Nun kann die elektronische Recheneinrichtung eine einzige Signatur vom Endgerät mit dem einmaligen öffentlichen Schlüssel erfolgreich verifizieren und der sichere Übertragungskanal kann abgebaut werden. Folglich rechnet das Endgerät, insbesondere offline und parallel zu anderen Funktionalitäten, den Root-Hash beispielsweise für das XMSS-Verfahren aus, signiert diesen Root-Hash mit einem hashbasierten Signaturverfahren und dem einmaligen privaten Schlüssel und schickt dieses zur elektronischen Recheneinrichtung. Die elektronische Recheneinrichtung verifiziert nun die Signatur mit dem öffentlichen Schlüssel und akzeptiert den Root-Hash, welcher für die Verifizierung von mehreren Signaturen von diesem Endgerät dienen soll. So wie beim ersten Konzept, falls andere Parteien im Kommunikationssystem Signaturen von diesem Endgerät auch vertrauenswürdig verifizieren sollen, kann die elektronische Recheneinrichtung zusätzlich eine der vier Möglichkeiten vom vorhergehenden Aspekt als weitere Aufgabe übernehmen oder auch weitere Verfahren zur Feststellung der Vertrauenswürdigkeit im Root-Hash nutzen. Im Allgemeinen ist ein schnellerer Abbau des sicheren Übertragungskanals zwischen dem Endgerät und dem Remotesystem mit dieser Variante möglich. Jedoch ist die gesamte Anzahl von Hashberechnungen dabei höher.

Insbesondere betrifft somit die Erfindung in einem unabhängigen Aspekt ein Verfahren zum Erzeugen zumindest einer hashbasierten Signatur für ein Endgerät in einem Kommunikationsnetzwerk mittels eines Kommunikationssystems. Es wird ein Hashseed mittels einer elektronischen Recheneinrichtung oder mittels einer weiteren elektronischen Recheneinrichtung des Endgeräts erzeugt. Es wird beispielsweise ein sicherer Übertragungskanal zwischen dem Endgerät und der elektronischen Recheneinrichtung mittels des Kommunikationssystems erzeugt. Es erfolgt das Erzeugen von zumindest einem privaten Schlüssel in Abhängigkeit von dem Hashseed mittels der weiteren elektronischen Recheneinrichtung des Endgeräts. Es wird die hashbasierte Signatur in Abhängigkeit von dem privaten Schlüssel erzeugt und es wird ein öffentlicher Schlüssel in Abhängigkeit von dem privaten Schlüssel mittels der elektronischen Recheneinrichtung zum Verifizieren der hashbasierten Signatur erzeugt. In Abhängigkeit von dem Hashseed wird eine Einmalsignatur mit einem einmaligen privaten Schlüssel erzeugt und mit einem einmaligen öffentlichen Schlüssel verifiziert, und der einmalige öffentliche Schlüssel wird über den sicheren Übertragungskanal an die elektronische Recheneinrichtung übertragen, und nach dem Übertragen des einmaligen öffentlichen Schlüssels wird der sichere Übertragungskanal abgebaut. Hierbei kann insbesondere während der Erzeugung der Einmalsignatur, des einmaligen privaten Schlüssels und des einmaligen öffentlichen Schlüssels parallel im Endgerät die zumindest eine hashbasierte Signatur erzeugt werden, wobei hierbei ferner insbesondere der öffentliche Schlüssel mit dem einmaligen privaten Schlüssel signiert wird, und der signierte öffentliche Schlüssel, insbesondere über den ungesicherten Übertragungskanal, an die elektronische Recheneinrichtung übertragen werden, und der signierte öffentliche Schlüssel mit dem einmaligen öffentlichen Schlüssel mittels der elektronischen Recheneinrichtung verifiziert werden. Alternativ zum privaten Schlüssel kann auch der Root-Hash übertragen werden.

Die Konzepte dieser Erfindung können für Post und Pre-quantum Anwendungen verwendet werden. Diese Konzepte sind ebenso vorteilhaft für die Migration von Pre- zu Post-Quantum Anwendungen. Dabei müssen nur ausreichend entsprechend sichere Hashberechnungen und die benötigte Steuerlogik, insbesondere in Hardware oder Software, unterstützt werden.

Vorteilhafte Ausgestaltungsformen des ersten Aspekts der Erfindung sind auch als vorteilhafte Ausgestaltungsformen des zweiten, insbesondere unabhängigen Aspekts der Erfindung, anzusehen.

Ferner betrifft die Erfindung auch ein Computerprogrammprodukt mit Programmcodemitteln, welche zumindest eine elektronische Recheneinrichtung oder die zwei elektronischen Recheneinrichtungen des Kommunikationssystems dazu veranlassen, wenn die Programmcodemittel von der zumindest einen elektronischen Recheneinrichtung abgearbeitet werden, ein Verfahren nach dem vorhergehenden Aspekt durchzuführen.

Ebenfalls betrifft die Erfindung auch ein computerlesbares Speichermedium mit dem Computerprogrammprodukt nach dem vorhergehenden Aspekt.

Weiterhin betrifft die Erfindung auch ein Kommunikationssystem mit zumindest einem Endgerät und einer elektronischen Recheneinrichtung, wobei das Kommunikationssystem zum Durchführen eines Verfahrens nach dem vorhergehenden Aspekt ausgebildet ist.

Ferner ist auch vorgesehen, dass gemäß dem unabhängigen Aspekt der Erfindung ein Computerprogrammprodukt mit Programmcodemitteln vorgeschlagen ist, um die entsprechenden Verfahrensschritte, wenn diese von der zumindest einen elektronischen Recheneinrichtung abgearbeitet werden, gemäß dem unabhängigen Aspekt durchzuführen. Auch betrifft die Erfindung dabei ein computerlesbares Speichermedium mit dem Computerprogrammprodukt, um den unabhängigen Aspekt der Erfindung durchzuführen.

Ferner ist auch ein Kommunikationssystem mit zumindest einem Endgerät und einer elektronischen Recheneinrichtung vorgeschlagen, wobei das Kommunikationssystem zum Durchführen eines Verfahrens nach dem unabhängigen Aspekt der Erfindung ausgebildet ist.

Unter einer Recheneinheit/elektronischer Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Vorteilhafte Ausgestaltungsformen des Verfahrens sind als vorteilhafte Ausgestaltungsformen des Computerprogrammprodukts, des computerlesbaren Speichermediums sowie des Kommunikationssystems anzusehen. Das Kommunikationssystem weist hierzu insbesondere gegenständliche Merkmale auf, um entsprechende Verfahrensschritte durchführen zu können.

Die elektronische Recheneinrichtung weist hierzu insbesondere Prozessoren, Schaltkreise, insbesondere integrierte Schaltkreise, sowie weitere elektronische Bauteile auf. Ferner weist auch die weitere elektronische Recheneinrichtung zumindest Prozessoren, Schaltkreise, insbesondere integrierte Schaltkreise, sowie weitere elektronische Bauteile auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die Erfindung wird nun anhand der Zeichnungen näher erläutert. Dabei zeigen:
- FIG 1: ein schematisches Blockschaltbild gemäß einer Ausführungsform eines Kommunikationssystems;
- FIG 2: ein weiteres schematisches Blockschaltbild gemäß einer Ausführungsform eines Kommunikationssystems; und
- FIG 3: ein weiteres schematisches Blockschaltbild gemäß Ausführungsform eines Kommunikationssystems gemäß eines ersten Aspekts der Erfindung beziehungsweise ein Kommunikationssystem eines unabhängigen Aspekts der Erfindung.

In den Figuren sind gleiche oder funktionsgleiche Elemente mit den gleichen Bezugszeichen versehen.

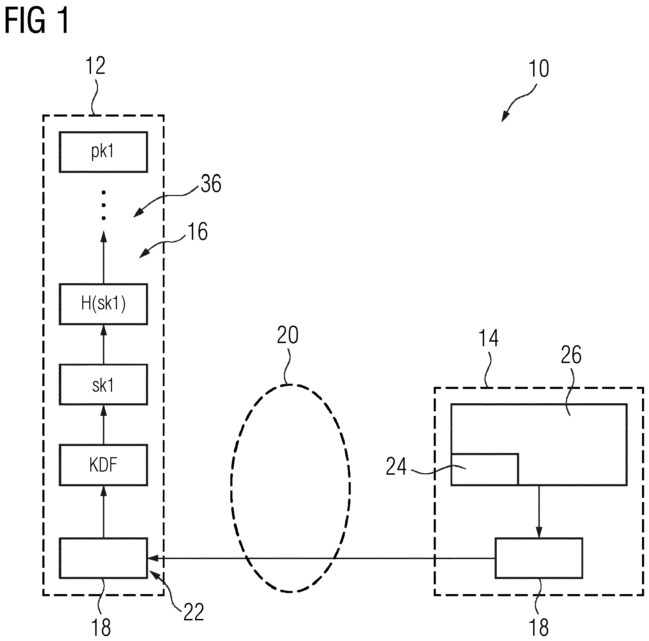

FIG 1 zeigt ein schematisches Blockschaltbild gemäß einer Ausführungsform eines Kommunikationssystems 10. Das Kommunikationssystem 10 weist zumindest ein Endgerät 12 sowie eine elektronische Recheneinrichtung 14 auf. Das Endgerät 12 weist ferner insbesondere eine weitere elektronische Recheneinrichtung 16 auf.

Insbesondere zeigt die FIG 1 eine Ausführungsform zum Erzeugen von zumindest einer hashbasierten Signatur 36 vom Endgerät 12 in einem Kommunikationsnetzwerk mittels des Kommunikationssystems 10. Insbesondere ist dargestellt, dass mittels einer iterativen Hashberechnung H(sk1) die hashbasierte Signatur 36 realisiert werden kann. Die hashbasierte Signatur 36 kann dabei beispielsweise mittel WOTS, XMSS und/oder LMS erfolgen. Es erfolgt das Erzeugen eines Hashseeds 18 mittels der elektronischen Recheneinrichtung 14 und das Erzeugen eines sicheren Übertragungskanals 20 zwischen dem Endgerät 12 und der elektronischen Recheneinrichtung 14. Es wird das Hashseed 18 an das Endgerät 12 über den sicheren Übertragungskanal 20 übertragen und es erfolgt das Speichern des Hashseeds 18 im Endgerät 12 in einer Speichereinrichtung 22 im Endgerät 12. Es wird zumindest ein privater Schlüssel sk1 in Abhängigkeit von dem Hashseed 18 mittels der weiteren elektronischen Recheneinrichtung 16 erzeugt. Es erfolgt das Erzeugen der hashbasierten Signatur 36 in Abhängigkeit von dem privaten Schlüssel sk1 und das Erzeugen eines öffentlichen Schlüssels pk1 mittels der weiteren elektronischen Recheneinrichtung 16 zum Verifizieren der hashbasierten Signatur 36.

Insbesondere zeigt die FIG 1 zusätzlich, dass das Hashseed 18 beispielsweise mittels eines Zufallszahlengenerators 24 der elektronischen Recheneinrichtung 14 erzeugt wird. Insbesondere weist nämlich die elektronische Recheneinrichtung 14 zusätzlich eine Schlüsselmanagementeinrichtung 26 auf, wobei der Zufallszahlengenerator 24 als Teil der Schlüsselmanagementeinrichtung 26 angesehen werden kann.

Der öffentliche Schlüssel pk1 wird insbesondere auf Basis einer iterativen Hashberechnung H(sk1) des privaten Schlüssels sk1 erzeugt. Eine Parallelisierung zur Beschleunigung beispielsweise mit einer Baumstruktur, ist an dieser Stelle auch möglich

Ferner kann vorgesehen sein, dass mittels der elektronischen Recheneinrichtung 14 eine Vielzahl von Hashseeds 18 in einem vorgegebenen Zeitraum erzeugt wird, und mittels der elektronischen Recheneinrichtung 14 durch Vergleichen der Hashseeds 18 in dem Zeitraum eine Wiederholung von gleichen Hashseeds 18 verhindert wird.

Ferner zeigt die FIG 1, dass mittels einer Schlüsselableitungsfunktion KDF der private Schlüssel sk1 auf Basis des Hashseeds 18 erzeugt wird.

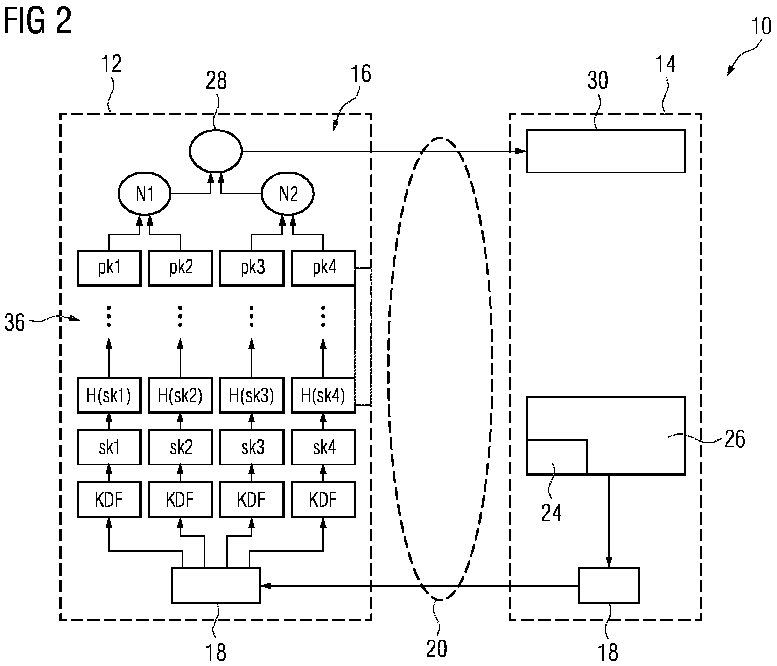

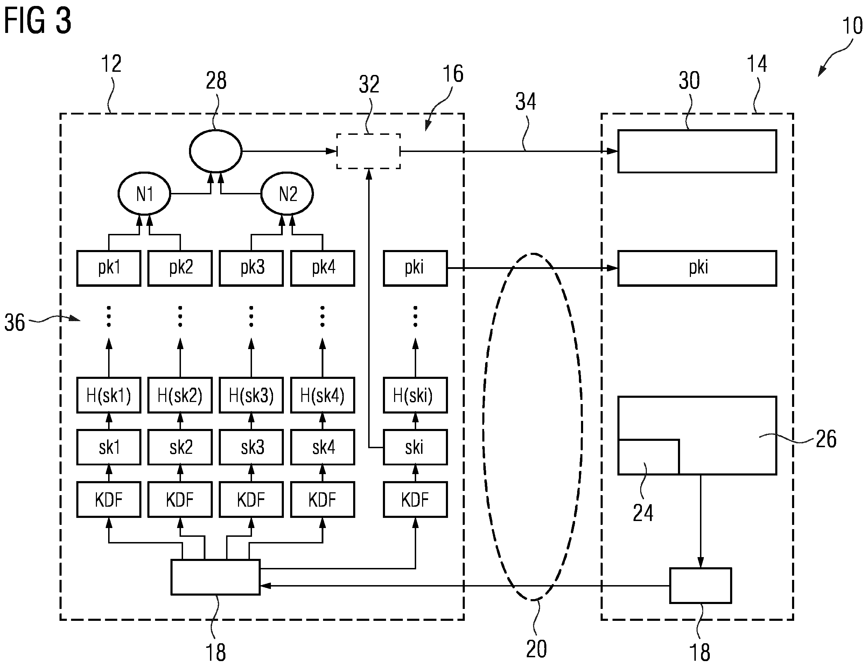

Insbesondere zeigt somit die Fig. 1 ein Beispiel des Konzeptes für die Erstellung eines einzigen Schlüsselpaares, welches für eine hashbasierte Signatur 36 (z.B. XMSS) gültig ist, die für interne Funktionalitäten im Endgerät benutzt werden soll. Das Hashseed 18 wird beim Remotesystem, also bei der elektronischen Recheneinrichtung 14, generiert und über einen sicheren Kanal mit dem Endgerät 12 ausgetauscht. Für interne Funktionalitäten kann dann sofort danach der sichere Übertragungskanal 20 abgebaut werden. Der sichere Übertragungskanal 20 zum Übertragen des Hashseeds 18 muss dabei eine entsprechende Integrität und Vertraulichkeit aufweisen. Aus diesem Hashseed 18 dürfen keine privaten Schlüssel generiert werden, die bereits einmal in der Lebensdauer des Endgerätes 12 verwendet wurden. Diese Aufgabe ist aufwendig und wird von der Schlüsselverwaltungseinrichtung 26 bzw. vom Key Management Einheit beim Remotesystem oder einer entsprechende Leistungsfähige Partei im Kommunikationssystem 10 übernommen. Das Endgerät 12 empfängt das Hashseed 18 über den sicheren Kanal und generiert daraus einen privaten Schlüssel sk1 mithilfe von KDF. Im Gegensatz zum Stand der Technik muss dieses Hashseed 18 nicht sicher gespeichert werden. Oft wird in solchen Anwendungen nur eine Signatur benötigt. In diesem Fall muss das Hashseed 18 nicht gespeichert werden bzw. es würde reichen wenn der daraus gerechnete private Schlüssel sk1 im Endgerät 12 sicher gespeichert wird. Für mehrere Signaturen kann das Hashseed 18 zur Erzeugung von mehreren privaten Schlüsseln sk1 verwendet werden und daher kann das Hashseed 18 auch gespeichert werden. Dementsprechend können alle resultierende Public Keys gespeichert werden. Alternativ kann nur ein Root-Hash 28, wie in FIG 2 und FIG 3 später dargestellt, gerechnet und gespeichert werden. Nun kann das Endgerät 12 mit dem privaten Schlüssel sk1 eine hashbasierte Signatur 36 erstellen. Aus dem privaten Schlüssel sk1 wird durch iterative Hashberechnungen (WOTS) ein öffentlicher Schlüssel pk1 generiert und sicher gespeichert. Zu einem späteren Zeitpunkt kann die hashbasierte Signatur 36 erfolgreich mit diesem öffentlichen Schlüssel pk1 verifiziert werden. Die Erstellung und Verifizierung der hashbasierten Signaturen 36 mit dem privaten und öffentlichen Schlüssel sk1, pk1 kann dann beispielsweise gemäß den Standrads für XMSS und LMS ausgeführt werden (nicht in der Abbildung dargestellt). Ähnliche Beispiele existieren für andere hashbasierte Signaturverfahren oder mehrere Schlüsselpaare für hashbasierte Einmalsignaturen.

FIG 2 zeigt eine weitere schematische Ausführungsform des Kommunikationssystems 10, wobei die digitalen Signaturen für den Schutz der der Kommunikation vom Endgerät 12 bzw. nicht interne Funktionalitäten im Endgerät 12 benutzt werden können. Die FIG 2 zeigt insbesondere, dass auf Basis des Hashseeds 18 zumindest ein weiterer privater Schlüssel sk2, eine weitere hashbasierte Signatur und ein weiterer öffentlicher Schlüssel pk2 erzeugt werden. Ferner zeigt die FIG 2 insbesondere, dass auch ein dritter privater Schlüssel sk3, eine dritte hashbasierte Signatur und ein dritter öffentlicher Schlüssel pk3 sowie ein vierter privater Schlüssel sk4, eine vierte hashbasierte Signatur sowie ein vierter öffentlicher Schlüssel pk4 erzeugt werden können. Es sind ferner weitere iterative Hashberechnungen H(sk2) - H(sk4) gezeigt. Es kann dann vorgesehen sein, dass in Abhängigkeit von dem öffentlichen Schlüssel pk1 und dem weiteren öffentlichen Schlüssel pk2 der Root-Hash 28 mittels der weiteren elektronischen Recheneinrichtung 16 erzeugt wird, wobei der Root-Hash 28 an die elektronische Recheneinrichtung 14, insbesondere über den sicheren Übertragungskanal 20, übertragen wird. Insbesondere kann dann ein Vergleich 30 von dem Root-Hash 28 in der weiteren elektronischen Recheneinrichtung 14 durchgeführt werden.

Die FIG 2 zeigt ein Beispiel für einen Aspekt dieser Erfindung für das XMSS Verfahren mit vier möglichen hashbasierten Signaturen 36. Das Hashseed 18 wird beim Remotesystem generiert und über den sicheren Übertragungskanal 20 mit dem Endgerät 12 ausgetauscht. Aus diesem Hashseed 18 dürfen keine privaten Schlüssel generiert werden, die bereits einmal in der Lebensdauer des Endgerätes 12 verwendet wurden. Diese Aufgabe ist aufwendig und wird von der Schlüsselverwaltungseinrichtung 26 bzw. vom Key Management beim Remotesystem oder eine entsprechende leistungsfähige Partei im Kommunikationssystem 10 übernommen. Das Endgerät 12 empfängt das Hashseed 18 über den sicheren Übertragungsanal 20, speichert ihn in einem geschützten Speicher und generiert daraus vier private Schlüsseln sk1 - sk4 mithilfe von KDF. Für das XMSS Verfahren werden dann aus den vier privaten Schlüsseln sk1 - sk4 durch iterative Hashberechnungen H(sk1) - H(sk4) vier öffentliche Schlüssel pk1 - pk4 generiert. Danach wird ein Root-Hash 28 aus diesen vier öffentlichen Schlüsseln pk1 - pk4 mithilfe des sogenannten Merkle-Baums, vorliegend insbesondere über einen ersten Knoten N1 und einen zweiten Knoten N2, erstellt, über den sicheren Kanal mit dem Remotesystem ausgetauscht und beim Remotesystem sicher gespeichert. Nun kann das Endgerät 12 vier hashbasierte Signaturen 36 erstellen, die vom Remotesystem erfolgreich mit dem Root-Hash 28 und dem richtigen Verifizierungspfad verifiziert werden können. Falls weitere Parteien im Gesamtsystem eine oder mehrere dieser Signaturen vertraulich verifizieren sollen, muss das Remotesystem eine der obengenannten vier Möglichkeiten übernehmen (Root-Hash 28 signieren und zum Endgerät 12 zurückschicken, Root-Hash 28 von einer Zertifizierungsstelle zertifizieren lassen und zum Endgerät 12 zurückschicken oder Root-Hash 28 mit den entsprechenden Parteien über einen weiteren sicheren Kanal). Ähnliche Beispiele existieren für das LMS verfahren, einfache Einmalsignaturen (ohne den Merkle-Baum) oder andere hashbasierte Signaturverfahren.

In dieser Variante der Erfindung kennt die elektronische Recheneinrichtung 14 die privaten Schlüssel sk1 - sk4 vom Endgerät 12 nicht. Falls in einer anderen Variante dieser Erfindung, das Remotesystem vertraulich ist und die privaten Schlüssel sk1 - sk4 kennen darf, kann die komplette Berechnung bzw. die Erzeugung des Root-Hash 28 bei der elektronischen Recheneinrichtung 14 erfolgen. Das Endgerät 12 erhält dann im Anschluss die privaten und/oder öffentlichen Schlüssel sk1 - sk4 und/oder pk1 - pk4 über den sicheren Übertragungskanal 20 während der Initialisierungsphase vom Remotesystem. Damit kann das Endgerät 12 dann sehr effizient hashbasierte Signaturen 36 erzeugen. Diese Variante vereinfacht die Berechnung für das Endgerät 12, jedoch sind die privaten Schlüssel sk1 - sk4 auch für das Remotesystem bekannt und somit können valide Signaturen vom Remotesystem erstellt werden.

Der sichere Übertragungskanal 20 in der Initialisierungsphase zwischen dem Endgerät 12 und der elektronischen Recheneinrichtung 14 (für den Austausch vom Hashseed 18, Root-Hash 28 und möglicherweise den signierten/zertifizierten Root-Hash 28 vom Remotesystem/Zertifizierungsstelle) kann wie folgt aufgebaut werden. Es wird in einer Variante dieser Erfindung angenommen, dass das Endgerät 12 in der Initialisierungsphase in einer sicheren Umgebung direkt am Remotesystem angeschlossen wird, so dass Angriffe nicht möglich sind. In einer anderen Variante dieser Erfindung kann so ein sicherer Kanal z.B. mithilfe von einem Authenticated encryption with Associated Data (AEAD) Verfahren, beispielsweise AES-GCM und (Preshared) symmetrischer Schlüssel, aufgebaut werden.

Die Berechnung des Root-Hash 28 ist sehr aufwendig. Je nach Implementierung und Variante des hashbasierte Signaturverfahrens kann die Berechnung des Root-Hashs 28 um einen Faktor von mehreren Hundert bis mehrere Hunderttausend komplexer als die Erzeugung oder Verifizierung einer Signatur mit demselben Verfahren sein. Für das betrachtete Anwendungsbeispiel sollte der sichere Übertragungskanal 20 zwischen dem Endgerät 12 und der elektronischen Recheneinrichtung 14 solange vorhanden sein, bis die aufwendige Root-Hash-Berechnung durchgeführt wird und der resultierende Root-Hash 28 mit dem Remotesystem ausgetauscht wird. Folglich, in vielen Anwendungen, besteht der Bedarf an einer schnellen Lösung für die Berechnung des öffentlichen Schlüssels pk1, damit dieser an das Remotesystem über den sicheren Übertragungskanal 20 weitergeleitet wird. Somit kann der sichere Übertragungskanal 20 zwischen dem Endgerät 12 und der elektronischen Recheneinrichtung 14 schnell abgebaut werden.

FIG 3 zeigt eine weitere Ausführungsform des Kommunikationsnetzwerks 10, wobei die digitale Signaturen für Schutz der der Kommunikation vom Endgerät bzw. nicht interne Funktionalitäten im Endgerät benutzt werden sollen. Ferner zeigt die FIG 3 auch einen unabhängigen Aspekt der Erfindung. Die FIG 3 zeigt insbesondere, dass in Abhängigkeit von dem Hashseed 18 eine Einmalsignatur 38 mit einem einmaligen privaten Schlüssel ski erzeugt und mit einem einmaligen öffentlichen Schlüssel pki verifiziert wird und der einmalige öffentliche Schlüssel pki über den sicheren Übertragungskanal 20 an die elektronische Recheneinrichtung 14 übertragen wird, und nach dem Übertragen des einmaligen öffentlichen Schlüssels pki der sichere Übertragungskanal 20 abgebaut wird. Je nach Anzahl von Schlüsselpaaren und die Berechnung des Root-Hashs 28 kann dieses Konzept somit den Abbau des sicheren Übertragungskanals 20 beschleunigen. Im Nachgang wird der Root-Hash 28 für alle benötigte öffentliche Schlüsseln parallel zu anderen Funktionalitäten im Endgerät berechnet, mit dem privaten Schlüssel ski signiert und an das Remotesystem geschickt. Das Remote System kann dann die Signatur mit pki verifizieren und diesen Root-Hash vertrauenswürdig akzeptieren.

Ferner kann hierbei vorgesehen sein, dass der öffentliche Schlüssel pk1 und/oder der Root-Hash 28 mit dem einmaligen privaten Schlüssel ski signiert wird, was vorliegend mit dem Bezugszeichen 32 dargestellt ist, und der signierte öffentliche Schlüssel 32 über einen ungesicherten Übertragungskanal 34 an die elektronische Recheneinrichtung 14 übertragen wird, und der signierte öffentliche Schlüssel 32 mit dem einmaligen öffentlichen Schlüssel pki mittels der elektronischen Recheneinrichtung 14 verifiziert wird.

In dieser Variante wird ein zweites Konzept beziehungsweise auch ein unabhängiger Aspekt der Erfindung vorgeschlagen. Bei diesem Konzept wird ebenso ein Hashseed 18 vom Remotesystem über einen sicheren Übertragungskanal 20 gesendet. Aus diesem Hashseed 18 generiert das Endgerät 12 mit Hilfe eines KDF und iterative Hashberechnungen H(sk1) - H(sk4) ein einmaliges Schlüsselpaar ski, pki für eine Einmalsignatur 38 und tauscht den einmaligen öffentlichen Schlüssel pki mit der elektronischen Recheneinrichtung 14 aus. Nun kann das Remotesystem eine Einmalsignatur 38 vom Endgerät 12 mit dem einmaligen öffentlichen Schlüssel pki erfolgreich verifizieren und der sichere Kanal kann abgebaut werden. Folglich rechnet das Enderät 12, beispielsweise offline und parallel zu anderen Funktionalitäten, den Root-Hash 28 beispielsweise für das XMSS, signiert diesen Root-Hash 28 mit einem hashbasierten Signaturverfahren und dem einmaligen privaten Schlüssel ski und schickt diesen zum Remotesystem. Das Remotesystem verifiziert die Signatur mit dem einmaligen öffentlichen Schlüssel pki, der vorher über den sicheren Übertagungskanal 20 ausgetauscht wurde, und akzeptiert den Root-Hash 28, welcher für die Verifizierung von mehreren Signaturen von diesem Endgerät 12 dienen soll. Sowie die erste Variante, falls andere Parteien im System Signaturen von diesem Endgerät 12 auch vertraut verifizieren sollen, kann das Remotesystem zusätzlich eine der vier Möglichkeiten als weitere Aufgabe übernehmen.

Im Allgemeinen ist ein schnellerer Abbau des sicheren Übertragungskanals 20 zwischen dem Endgerät 12 und der elektronischen Recheneinrichtung 14 mit dieser Variante möglich. Jedoch ist die gesamte Anzahl von Hashberechnungen höher.

Eine wichtige Anforderung von Hash-Basierten Signaturen ist, dass die privaten Schlüssel sk1 - sk4 nicht wiederholt werden. Damit das Remotesystem sicherstellt, dass die Schlüssel immer neu sind, merkt sich das Remotesystem die bereits verwendeten Hashseeds 18, um den gleichen Hashseed 18 nicht zweimal zu verwenden. Das Endgerät 12 muss garantieren, dass die von dem Hashseed 18 abgeleiteten Schlüssel nicht gleich sind. Damit derselbe Schlüssel nicht zweimal generieret wird, kann ein Zählwert mit dem Hashseed 18 konkateniert werden und als Input für die KDF verwendet werden. Dabei muss die Bitbreite des konkatenierten Zählwerts log2(Anzahl Signaturen) entsprechen z.B. für Variante 1 dieses Konzepts werden die privaten Schlüssel wie folgt erstellt sk1=KDF(Seed|00b), sk2=KDF(Seed|01b), ... sk4=KDF(Seed|11b).

Folgendes ist an dieser Stelle sehr wichtig zu erwähnen, der unabhängige Aspekt ist auch vorteilshaft, wenn das Hashseed 18 beim Endgerät 12 und nicht der elektronischen Recheneinrichtung 14 erzeugt und verwaltet wird. Dabei wäre der Hauptvorteil, dass das Endgerät 12 aus diesem Hashseed 18 ein einziges Schlüsselpaar (ski, pki) für eine einzige hashbasierte Einmalsignatur 38 erzeugt und den öffentlichen Schlüssel pki mit dem Remotesystem in einer geschützten Art und Weise austauscht. Sofort danach kann das Endgerät 12 zum Einsatz kommen und sicherheitsunkritische Funktionalitäten durchführen. Parallel dazu kann das Endgerät 12 offline und parallel zu anderen Funktionalitäten den Root-Hash 28 beispielsweise für das XMSS rechnen. Wenn der Root-Hash 28 vollständig berechnet wird, signiert das Endgerät 12 diesen Root-Hash 28 mit einem hashbasierten Signaturverfahren und dem privaten vorherbestimmten privaten einmaligen Schlüssel ski und schickt diesen zum Remotesystem. Das Remotesystem kann dann diese Signatur mit dem einmaligen öffentlichen Schlüssel pki verifizieren. Der Vorteil dabei ist, dass das Endgerät 12 mit der aufwendigen Berechnung des Root-Hashes 28 nicht lange aufgehalten wird. Stattdessen kann das Endgerät 12 schnell ein Schlüsselpaar erzeugen, den öffentlichen Schlüssel mit dem Remotesystem austauschen, parallel zu anderen sicherheitsunkritischen Funktionalitäten den Root-Hash 28 berechnen, letztlich diesen Root-Hash 28 mit dem vorherigen privaten Schlüssel ski signieren und an das Remotesystem schicken.

Für die Verifizierung einer Signatur mit XMSS oder LMS Signaturverfahren müssen zusätzlich zu der Signatur der öffentliche Schlüssel pk1 - pk4 sowie die richtigen Pfadknoten N1, N2 zum Root-Hash 28 mitgeschickt werden. Z.B. für die Verifizierung einer Signatur mit dem Schlüssel sk1, müssen pk1, pk2 sowie der Knoten N2 mit der Signatur mitgeschickt werden. So kann der Verifizierer den Root-Hash 28 daraus berechnen und die weitere Verifizierung der Signatur vertrauen.

In einer Variante dieser Erfindung muss die Gültigkeit des Root-Hashs 28 des Endgerätes 12 zeitlich begrenzt sein, dies ist insbesondere für höhere Sicherheitsmaßnahmen interessant.

Damit das Endgerät 12 zusätzlich noch hashbasierte Signaturen vom Remotesystem oder einer anderen Partei im System verifizieren kann, müssen die öffentlichen Schlüssel pk1 - pk4 des Remotesystems oder der jeweiligen Partei in einer Variante dieser Erfindungsmeldung während der Initialisierungsphase vom Remotesystem zum Endgerät 12 über den sicheren Übertragungskanal geschickt werden. Vorzugsweise soll dieser öffentliche Schlüssel pk1 - pk4 einen Root-Hash 28 einer hashbasierten Signaturverfahren (XMSS oder LMS) sein. Somit kann das Endgerät 12 nur mithilfe von Hashfunktionen (und einfache Steuerlogik) Signaturen verifizieren.

## Patentansprüche

1. Verfahren zum Erzeugen von zumindest einer hashbasierten Signatur 36 für ein Endgerät (12) in einem Kommunikationsnetzwerk mittels eines Kommunikationssystems (10), mit den Schritten:
- Erzeugen eines Hashseeds (18) mittels einer elektronischen Recheneinrichtung (14) des Kommunikationssystems (10);
- Erzeugen eines sicheren Übertragungskanals (20) zwischen dem Endgerät (12) und der elektronischen Recheneinrichtung (14) mittels des Kommunikationssystems (10);
- Übermitteln des Hashseeds (18) an das Endgerät (12) über den sicheren Übertragungskanal (20);
- Speichern des Hashseeds (18) im Endgerät (12) in einer Speichereinrichtung (22) des Endgeräts (12);
- Erzeugen von zumindest einem privaten Schlüssel (sk1) in Abhängigkeit von dem Hashseed (18) mittels einer weiteren elektronischen Recheneinrichtung (16) des Endgeräts (12); und
- Erzeugen der hashbasierten Signatur 36 in Abhängigkeit von dem privaten Schlüssel (sk1) und Erzeugen eines öffentlichen Schlüssels (pk1) in Abhängigkeit von dem privaten Schlüssel (sk1) mittels der weiteren elektronischen Recheneinrichtung (16) zum Verifizieren der hashbasierten Signatur 36.

2. Verfahren nach Anspruch 1, **dadurch gekennzeichnet, dass** das Hashseed (18) mittels eines Zufallszahlengenerators (24) der elektronischen Recheneinrichtung (14) erzeugt wird.

3. Verfahren nach Anspruch 1 oder 2, **dadurch gekennzeichnet, dass**
der öffentliche Schlüssel (pk1) auf Basis einer iterativen Hashberechnung des privaten Schlüssels (sk1) erzeugt wird.

4. Verfahren nach einem der vorhergehenden Ansprüche, **dadurch gekennzeichnet, dass**
mittels der elektronischen Recheneinrichtung (14) eine Vielzahl von Hashseeds (18) in einem vorgegebenen Zeitraum erzeugt wird, und mittels der elektronischen Recheneinrichtung (14) durch Vergleichen der Hashseeds (18) in dem Zeitraum eine Wiederholung von gleichen Hashseeds (18) verhindert wird.

5. Verfahren nach einem der vorhergehenden Ansprüche, **dadurch gekennzeichnet, dass**
mittels einer Schlüsselableitungsfunktion (KDF) der private Schlüssel (sk1) auf Basis des Hashseeds (18) erzeugt wird.

6. Verfahren nach einem der vorhergehenden Ansprüche, **dadurch gekennzeichnet, dass**
auf Basis des Hashseeds (18) zumindest ein weiterer privater Schlüssel (sk2), eine weitere hashbasierte Signatur und ein weiterer öffentlicher Schlüssel (pk2) erzeugt werden.

7. Verfahren nach Anspruch 6, **dadurch gekennzeichnet, dass** in Abhängigkeit von dem öffentlichen Schlüssel (pk1) und dem weiteren öffentlichen Schlüssel (pk2) ein Root-Hash (28) mittels der weiteren elektronischen Recheneinrichtung (16) erzeugt wird.

8. Verfahren nach Anspruch 7, **dadurch gekennzeichnet, dass** der Root-Hash (28) an die elektronische Recheneinrichtung (14) übertragen wird und/oder dass der Root-Hash (28) über den sicheren Übertragungskanal (20) an die elektronische Recheneinrichtung (14) übertragen wird.

9. Verfahren nach Anspruch 7 oder 8, **dadurch gekennzeichnet, dass**
der Root-Hash (28) mittels der elektronischen Recheneinrichtung (14) überprüft wird.

10. Verfahren nach einem der vorhergehenden Ansprüche, **dadurch gekennzeichnet, dass**
in Abhängigkeit von dem Hashseed (18) eine Einmalsignatur (38) mit einem einmaligen privaten Schlüssel (ski) und einem einmaligen öffentlichen Schlüssel (pki) erzeugt wird, und der einmalige öffentliche Schlüssel (pki) über den sicheren Übertragungskanal (20) an die elektronische Recheneinrichtung (14) übertragen wird, und nach dem Übertragen des einmaligen öffentlichen Schlüssels (pki) der sichere Übertragungskanal (20) abgebaut wird.

11. Verfahren nach Anspruch 10, **dadurch gekennzeichnet, dass** während der Erzeugung des einmaligen privaten Schlüssels (ski) und des einmaligen öffentlichen Schlüssels (pki) parallel im Endgerät (12) die zumindest eine hashbasierte Signatur (36) erzeugt wird.

12. Verfahren nach Anspruch 11, **dadurch gekennzeichnet, dass** der öffentliche Schlüssel (pk1) mit dem einmaligen privaten Schlüssel (ski) signiert wird, und der signierte öffentliche Schlüssel (32), insbesondere über einen ungesicherten Übertragungskanal (34), an die elektronische Recheneinrichtung (14) übertragen wird, und der signierte öffentliche Schlüssel (32) mit dem einmaligen öffentlichen Schlüssel (pki) mittels der elektronischen Recheneinrichtung (14) verifiziert wird.

13. Computerprogrammprodukt mit Programmcodemitteln, welche zumindest eine elektronische Recheneinrichtung (14, 16) dazu veranlassen, wenn die Programmcodemittel von der zumindest einen elektronischen Recheneinrichtung (14, 16) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Kommunikationssystem (10) mit zumindest einem Endgerät (12) und einer elektronischen Recheneinrichtung (14), wobei das Kommunikationssystem (10) zum Durchführen eines Verfahrens nach einem der Ansprüche 1 bis 12 ausgebildet ist.
